# EUROPÄISCHE PATENTANMELDUNG

(11) **EP 4 019 793 A1**
(43) Veröffentlichungstag der Anmeldung: **29.06.2022**
(21) Anmeldenummer: 20216456.2
(22) Anmeldetag: 22.12.2020
(51) Int. Cl.: F16D 1/08

(54) **PASSELEMENT ZUR FORMSCHLÜSSIGEN VERBINDUNG ZWEIER KÖRPER**

(71) Anmelder: Siemens Aktiengesellschaft, 80333 München (DE)
(72) Erfinder: Ganster, Axel, 84419 Schwindegg (DE)

(57) **Zusammenfassung**

Es wird ein Passelement (1) zur formschlüssigen, kraft- und/oder drehmomentübertragenden Verbindung zweier Körper (110,120) angegeben,
- welches gleichzeitig als Sensoreinheit zur Messung eines Drehmoments und/oder einer Kraft ausgestaltet ist,
- wobei das Passelement (1) einen Grundkörper (2) aufweist, der auf einer ersten Außenfläche (2a) eine Ausnehmung (3) aufweist,
und wobei in diese Ausnehmung (3) ein Sensorelement (4) eingebettet ist, welches dazu ausgelegt ist, ein Messsignal (M) bereitzustellen, das von einer mechanischen Verformung des Grundkörpers (2) beeinflusst wird.

Weiterhin werden eine Messvorrichtung (10) sowie eine mechanische Einrichtung (100) mit einem solchen Passelement (1) angegeben.

## Beschreibung

Die vorliegende Erfindung betrifft ein Passelement zur formschlüssigen, kraft- und/oder drehmomentübertragenden Verbindung zweier Körper. Weiterhin betrifft die Erfindung eine Messvorrichtung zur Messung einer Kraft und/oder eines Drehmoments sowie eine mechanische Einrichtung, in der eine Kraft und/oder ein Drehmoment übertragen werden kann.

Aus dem Stand der Technik sind verschiedene Passelemente bekannt, mit denen zwei Körper kraft- bzw. drehmomentübertragend verbunden werden können. So werden zum Beispiel Verbindungen zwischen Wellen und Naben häufig durch Passfedern vermittelt. Dabei ist die Passfeder sowohl in der Welle als auch in der Nabe in eine axiale Passfedernut eingepasst, wodurch eine rein formschlüssige Verbindung entsteht. Solche Passfedern und auch andere Passelemente wie z.B. Scheibenfedern werden im Maschinenbau häufig eingesetzt. Eine genaue Passung wird dadurch erleichtert, dass hier typischerweise genormte Bauteile zum Einsatz kommen. So können auch Passelemente verschiedener Hersteller ohne größere Schwierigkeiten als untereinander austauschbare Komponenten verwendet werden. Generell sind die rein formschlüssigen Verbindungen über solche Passelemente kompakt zu realisieren, da für die Verbindung kaum zusätzlicher Bauraum benötigt wird. Vor allem in axialer Richtung entsteht bei einer solchen Verbindung zwischen einer Welle und einer Nabe kein zusätzlicher Platzbedarf. Außerdem ist sie leicht wieder lösbar. Nachteilig bei dieser Art der Verbindung ist, dass es sich um eine sehr einfache mechanische Kopplung handelt, bei der keine zusätzliche Funktionalität zur Verfügung gestellt wird.

Eine andere Möglichkeit zur kraft- bzw. drehmomentübertragenden Verbindung zweier Elemente im Maschinenbau ist beispielsweise durch Flanschverbindungen gegeben. Hierbei werden ringförmige, gelochte Flanschscheiben über Schraubverbindungen miteinander gekoppelt. Solche Flanschverbindungen werden häufig eingesetzt, um axiale Abschnitte einer Welle miteinander zu verbinden oder auch um eine Welle mit einer Nabe zu koppeln. Es handelt sich dabei um eine Kombination aus form- und kraftschlüssiger Verbindung. Auch hier ist die Verbindung zerstörungsfrei lösbar. Nachteilig ist, dass für die Flanschringe vergleichsweise viel Bauraum zur Verfügung gestellt werden muss, vor allem in axialer Richtung (wenn ein zusätzlicher Kopplungsabschnitt benötigt wird), aber auch in radialer Richtung, da die Flanschringe selbst eine nicht zu vernachlässigende radiale Abmessung aufweisen.

Wenn im Maschinenbau eine zwischen zwei mechanischen Körpern wirkende Kraft oder ein dort wirkendes Drehmoment gemessen werden soll, werden häufig spezielle Messvorrichtungen genutzt, bei denen zwischen den beiden relevanten Körpern ein zusätzliches Element eingebracht wird. Hierbei kommen häufig Flanschverbindungen zum Einsatz. Das zusätzliche Element enthält meist einen Verformungskörper, welcher abhängig von der einwirkenden Kraft bzw. dem Drehmoment verformt wird. Eine solche Verformung kann beispielsweise über Dehnmessstreifen ermittelt werden, welche einen abhängig von einer lokalen Dehnung oder Stauchung veränderlichen elektrischen Widerstand aufweisen. So kann ein von der Verformung dieses zwischengeschalteten Verformungskörpers abhängiges Messsignal generiert werden. Auf diese Weise können Kräfte bzw. Drehmomente relativ genau gemessen werden. Nachteilig ist bei solchen Messvorrichtungen allerdings, dass durch die zwischengeschalteten Elemente und die zusätzlichen Verbindungen, meist in Form von Flanschverbindungen, ein relativ hoher zusätzlicher Platzbedarf entsteht. Es existieren jedoch viele Anwendungen, bei denen eine Kraft- oder Drehmomentmessung wünschenswert wäre, aber bei denen der für solche herkömmlichen Messvorrichtungen benötigte Bauraum nicht zur Verfügung steht.

Aufgabe der Erfindung ist es daher, ein Element zur kraft- und oder drehmomentübertragenden Verbindung zweier Körper zur Verfügung zu stellen, mit welchem eine kompakte Verbindung realisiert werden kann, wobei trotzdem auf platzsparende Weise eine Kraft- oder Drehmomentmessung innerhalb der betreffenden mechanischen Einrichtung möglich ist. Eine weitere Aufgabe ist es, eine Messvorrichtung sowie eine mechanische Einrichtung mit den entsprechenden Vorteilen zur Verfügung zu stellen.

Diese Aufgaben werden durch das in Anspruch 1 beschriebene Passelement, die in Anspruch 13 beschriebene Messvorrichtung und die in Anspruch 14 beschriebene mechanische Einrichtung gelöst.

Das erfindungsgemäße Passelement dient zur formschlüssigen, kraft- und/oder drehmomentübertragenden Verbindung zweier Körper. Dieses Passelement ist gleichzeitig als Sensoreinheit zur Messung eines Drehmoments und/oder einer Kraft ausgestaltet. Hierzu weist das Passelement einen Grundkörper auf, der auf einer ersten Außenfläche eine Ausnehmung aufweist. In diese Ausnehmung ist ein Sensorelement eingebettet, welches dazu ausgelegt ist, ein Messsignal bereitzustellen, das von einer mechanischen Verformung des Grundkörpers beeinflusst wird.

Das Passelement soll insbesondere dazu ausgelegt sein, eine rein formschlüssige oder zumindest überwiegend formschlüssige Verbindung zwischen den beiden zu verbindenden Körpern zu bewirken. Für die Herstellung der übergeordneten mechanischen Einrichtung kann ein solches Passelement insbesondere in entsprechende Nuten in den beiden Körpern passgenau eingebettet werden. Eine zusätzliche Fixierung des Passelements in einem der beiden Körper (beispielsweide durch eine Schraubverbindung in ein Schraubloch des Passelements) mit einem kraftschlüssigen Anteil soll dabei aber grundsätzlich nicht ausgeschlossen sein. Auch in einem solchen Fall wird die übergeordnete Kopplung der beiden Körper durch den Formschluss über das Passelement bewirkt.

Die mechanische Funktionalität der formschlüssigen und dabei kraft- bzw. drehmomentübertragenden Verbindung wird dabei im Wesentlichen durch den beschriebenen Grundkörper des Passelements zur Verfügung gestellt. Dabei kann es sich insbesondere um einen massiv ausgestalteten Körper aus einheitlichem Material handeln mit den weiter unten beschriebenen vorteilhaften Ausgestaltungen.

Wesentlich im Zusammenhang mit der vorliegenden Erfindung ist, dass es bei der Übertragung einer Kraft bzw. eines Drehmoments über diesen Grundkörper auch zu einer gewissen Verformung dieses Grundkörpers kommt. Die Spannungszustände im Material des Grundkörpers ändern sich abhängig von der Höhe der Kraft bzw. des Drehmoments, und es kommt an manchen Stellen zu lokalen Dehnungen und an anderen Stellen zu lokalen Stauchungen. Bei dem erfindungsgemäßen Passelement ist ein Sensorelement in eine Ausnehmung des Grundkörpers eingebettet, welche eine Messung dieser mechanischen Verformung ermöglicht. Um diese zusätzliche Funktionalität des Passelements zu erreichen, ist das Sensorelement dazu ausgelegt ein Messsignal bereitzustellen, welches von der mechanischen Verformung des Grundkörpers beeinflusst wird. Analog wie bei einem herkömmlichen externen Dehnmessstreifen, der außen auf ein Bauteil aufgeklebt wird, handelt es sich bei dem Messsignal insbesondere um ein elektrisches Messsignal. Dabei wird ausgenutzt, dass eine elektrische Eigenschaft des Sensorelements (beispielsweise auch hier ein elektrischer Widerstand) durch eine mechanische Verformung verändert wird. Um diesen gewünschten Effekt von der Verformung des Grundkörpers auf das Messsignal des Sensorelements zu erreichen, ist das Sensorelement so in die Ausnehmung des Grundkörpers eingebettet, dass eine mechanische Verformung des Grundkörpers auch zu einer mechanischen Verformung innerhalb des Sensorelements führt. Das Sensorelement ermöglicht dann in grundsätzlich bekannter Weise, ein Messsignal bereitzustellen, welches von seiner eigenen Verformung und damit indirekt auch von der Verformung des Grundkörpers abhängig ist. Da die Verformung des Grundkörpers von der übertragenen Kraft bzw. dem übertragenen Drehmoment abhängt, wird auf diese Weise eine hochintegrierte Messung dieser Größe(n) ermöglicht.

Die wesentlichen Vorteile der Erfindung liegen also darin, dass mit dem beschriebenen Passelement ähnlich wie bei den bekannten Passelementen mit einfachen Mitteln und sehr geringem Platzbedarf eine kraft- und/oder drehmomentübertragende Verbindung zweier Körper ermöglicht wird, wobei gleichzeitig und ohne zusätzliche Erhöhung des Platzbedarfs die Messung der Kraft bzw. des Drehmoments ermöglicht wird. Dabei ist das Passelement ein vorkonfektioniertes Bauteil, das zwar die zusätzliche Funktionalität aufweist, aber beim Einbau in die mechanische Einrichtung trotzdem genauso wie ein herkömmliches Bauteil gehandhabt werden kann. Weitere Vorteile eines solchen vorkonfektionierten Bauteils gegenüber einer nachträglichen Anbringung eines externen Drehmomentsensors beim Zusammenbau der Einrichtung können eine erhöhte Genauigkeit bei der Positionierung und räumlichen Orientierung des Sensorelements sowie bei seiner hermetischen Kapselung sein. Beides kann bei dem beschriebenen vorkonfektionierten Bauteil besonders leicht erreicht werden, wenn bei seiner Herstellung eine dedizierte Sensor-Fertigungslinie mit entsprechend abgestimmten Prozessen und einer zuverlässigen Qualitätssicherung zum Einsatz kommt. In diesem Fall sind Genauigkeit, Zuverlässigkeit und Haltbarkeit deutlich leichter zu gewährleisten als beim nachträglichen Einbau eines Sensorelements während des Aufbaus der mechanischen Einrichtung.

Die erfindungsgemäße Messvorrichtung dient zur Messung eines Drehmoments und/oder einer Kraft. Sie umfasst ein erfindungsgemäßes Passelement. Die Vorteile der Messvorrichtung ergeben sich analog zu den Vorteilen des erfindungsgemäßen Passelements. Die Messvorrichtung kann dabei grundsätzlich im Wesentlichen aus dem erfindungsgemäßen Passelement bestehen. Optional ist es aber auch möglich, dass die Messvorrichtung zusätzlich eine Ausleseeinheit zur Auslesung eines von dem Sensorelement des Passelements bereitgestellten Messsignals aufweist. Mit einer solchen externen Ausleseeinheit kann beispielsweise auch eine für die Messung benötigte elektrische Energie bereitgestellt werden. Eine solche zusätzliche externe Ausleseeinheit ist aber nicht zwingend erforderlich, da diese Funktionalität auch in das Passelement integriert werden kann - entweder durch ein zusätzliches Bauelement, welches zusammen mit dem Sensorelement in die Ausnehmung eingebettet ist oder auch zusammen mit dem Sensorelement in einer übergeordneten funktionalen Einheit.

Die erfindungsgemäße mechanische Einrichtung ist so ausgelegt, dass bei ihrem Betrieb in ihrem Inneren eine Kraft und/oder ein Drehmoment übertragen werden kann. Sie umfasst einen ersten Körper, der abhängig von der übertragenen Kraft und/oder dem übertragenen Drehmoment mechanisch verformt wird. Dieser erste Körper weist eine Nut auf, in die ein erfindungsgemäßes Passelement formschlüssig eingepasst ist. Durch die Kraft bzw. das Drehmoment erfährt der erste Körper eine mechanische Verformung, die von dieser Größe abhängt. Durch die formschlüssige Einpassung des Passelements in eine Nut dieses Körpers wird auch das Passelement auf entsprechende Weise verformt. Durch die erfindungsgemäße Ausgestaltung des Passelements wird so eine Messung der Kraft bzw. des Drehmoments möglich.

Vorteilhafte Ausgestaltungen und Weiterbildungen der Erfindung gehen aus den von den Ansprüchen 1 und 14 abhängigen Ansprüchen sowie der folgenden Beschreibung hervor. Dabei können die beschriebenen Ausgestaltungen des Passelements, der Messvorrichtung und der mechanischen Einrichtung allgemein vorteilhaft miteinander kombiniert werden.

So kann das Passelement besonders vorteilhaft als Passfeder oder als Scheibenfeder ausgestaltet sein. Eine Passfeder ist insbesondere ein längliches Bauteil mit rechteckigem Querschnitt, das dazu vorgesehen ist, in eine entsprechende längliche und rechteckige Passfedernut eingepasst zu werden. Eine Scheibenfeder ist ein Bauteil mit der Form einer halben Kreisscheibe, das dazu vorgesehen ist, als Keil in eine dazu passende halbrunde Nut eingelegt zu werden. Passfedern und Scheibenfedern sind besonders gängige Elemente zur formschlüssigen Verbindung einer Welle und einer Nabe. Beide weisen eine planare Oberfläche auf, welche bei der Einpassung in eine drehbare Welle nach radial außen weist. Eine solche radial außenliegende ebene Fläche eignet sich besonders, um dort die entsprechende Ausnehmung für das Sensorelement vorzusehen.

Besonders bevorzugt ist für das Passelement die Ausgestaltung als Passfeder, vor allem wenn sie in ihrer Form und ihren Abmessungen entsprechend der Norm DIN6885 ausgestaltet ist. Ein solches Bauteil bringt den Vorteil mit sich, dass es als Standard-Bauteil ohne besondere Modifikation in bestehenden mechanischen Einrichtungen bzw. in bestehende konstruktive Auslegungen übernommen werden kann. Damit kann in einer herkömmlichen Passfeder-Verbindung durch die Verwendung einer erfindungsgemäßen Passfeder eine zusätzliche Funktionalität zur Verfügung gestellt werden, ohne dass die wesentlichen mechanischen Parameter der formschlüssigen Verbindung geändert werden. Dies wird insbesondere dadurch ermöglicht, dass bei einer entsprechend geringen Tiefe der Ausnehmung und bei einer Anordnung auf einer nicht-kraftübertragenden Fläche der Passfeder die mechanischen Eigenschaften des Grundkörpers, die für die Kraft- oder Drehmomentübertragung entscheidend sind, im Vergleich zur herkömmlichen Passfeder nur unwesentlich verändert sind.

Grundsätzlich kommen alle in der Norm DIN6885 beschriebenen Formen für die erfindungsgemäße Ausgestaltung in Frage. So kann die Passfeder allgemein beispielsweise rundstirnig (Form A) oder geradstirnig (Form B) oder als Mischform (Form AB) ausgestaltet sein und optional eine oder mehrere Bohrungen für Halteschrauben bzw. Gewindebohrungen für Abdrückschrauben aufweisen (z.B. Formen C, D, E, F, usw. sowie Mischformen CD, AS, ABS, BS, EOS, usw.). Unabhängig von der genauen Ausgestaltung sind alle diese Varianten geeignet, um in einem genormten Passfeder-Bauteil durch eine geringe Modifikation eine zusätzliche Funktionalität zur Verfügung zu stellen, ohne dass die Funktionalität als mechanisches Kopplungselement wesentlich beeinträchtigt wird. In der übergeordneten mechanischen Einrichtung kann außerdem die Geometrie des ersten Körpers ebenfalls durch die genannte Norm bestimmt sein: So wird durch die DIN6885 insbesondere der Durchmesser einer Welle bestimmt, für die eine Passfeder mit bestimmten Abmessungen ausgelegt ist. Der erste Körper in der übergeordneten mechanischen Einrichtung kann dann insbesondere eine Welle mit dem in der Norm festgelegten passenden Durchmesser sein.

Allgemein vorteilhaft kann das Sensorelement stoffschlüssig mit dem Grundkörper verbunden sein. Durch eine solche dauerhafte stoffschlüssige Verbindung kann besonders einfach bewirkt werden, dass die bei der Übertragung einer Kraft und/oder eines Drehmoments auftretende Verformung des Grundkörpers sich in eine entsprechende Verformung des darin eingebetteten Sensorelements überträgt. Die stoffschlüssige Verbindung dient damit einer dauerhaften und engen mechanischen Ankopplung des Sensorelements an den Grundkörper. Dies ermöglicht eine besonders empfindliche Messung der relevanten Größe über das Messsignal des Sensorelements. Die beschriebene stoffschlüssige Verbindung ist jedoch nicht zwingend erforderlich: Allgemein kann auch schon durch eine enge, formschlüssige Einpassung des Sensorelements in die Ausnehmung eine Übertragung von Spannungsänderungen vom Grundkörper auf das Sensorelement erreicht werden. Wenn aber eine stoffschlüssige Verbindung zum Einsatz kommt, dann kann diese prinzipiell auf unterschiedliche Weise realisiert werden. So kann das Sensorelement beispielsweise in die Ausnehmung eingeklebt, eingesintert oder eingelötet sein. Bei der letztgenannten Variante kommen neben klassischen Lötverbindungen auch Methoden des Hartlötens oder des Glaslötens in Betracht.

Allgemein und unabhängig von der genauen Formgebung und der Anbindung des Sensorelements kann die Ausnehmung zusätzlich zu dem Sensorelement mit einem Füllmaterial ausgefüllt sein. Wenn das Sensorelement in einem ersten Schritt mit einem Klebemittel, einem Sintermittel oder einem Lotmittel stoffschlüssig mit dem Grundkörper verbunden worden ist, dann kann ein solches zusätzliches Füllmaterial die stoffschlüssige Verbindung zusätzlich unterstützen. In jedem Fall kann das Sensorelement durch das Füllmaterial nach außen hin gekapselt werden, wodurch ein Schutz gegen Umgebungseinflüsse gegeben ist und die Lebensdauer erhöht wird. Auch das Handling des Passelements kann durch ein solches Füllmaterial vereinfacht werden. Dies ist insbesondere dann der Fall, wenn die Ausnehmung mit dem Füllmaterial so weit aufgefüllt ist, dass sich nach außen hin wieder die ursprüngliche Form des Passelements (z.B. eine Form nach DIN6885) ergibt. Allgemein kann nach der Auffüllung mit dem Füllmaterial im Bereich der ersten Außenfläche wieder eine insgesamt planare Oberfläche des Passelements ausgebildet sein, mit anderen Worten ergibt sich eine bündig an die Kontur des Grundkörpers anschließende Gesamtkontur, und die äußere Form des Passelements ist durch die Integration des Sensorelements im Vergleich zu einem herkömmlichen Bauteil nicht verändert.

Gemäß einer vorteilhaften Ausführungsform ist die erste Au-ßenfläche, welche die Ausnehmung mit dem Sensorelement aufweist, eine nicht-kraftübertragende Fläche des Passelements, welche insbesondere planar ausgestaltet ist. Mit anderen Worten ist die vorgesehene Einbaulage des Passelements in einen ersten Körper so, dass die hauptsächliche Richtung der Krafteinwirkung vom ersten Körper auf das Passelement parallel zur ersten Außenfläche liegt. Sie kann insbesondere senkrecht zur Längsrichtung des Passelements liegen. Die hauptsächliche Kraftübertragung kann dann über sogenannte Seitenflächen des Passelements des Passelements erfolgen, welche senkrecht zur ersten Außenfläche liegen. Besonders vorteilhaft ist die erste Außenfläche mit der Ausnehmung diejenige Fläche des Passelements, welche dazu vorgesehen ist, bei einer Einpassung in eine drehbare Welle eine radial außenliegende Fläche zu sein. Dies ist vor allem dann zweckmäßig, wenn eine drahtlose Signalübertragung von dem Sensorelement auf eine externe Ausleseeinheit erfolgt. Bei radial außenliegender Anordnung des Sensorelements kann dann die elektromagnetische Abschirmung dieses Signals vorteilhaft gering gehalten werden.

Allgemein vorteilhaft kann der Grundkörper des Passelements aus einem metallischen Material gebildet sein, insbesondere aus einem Stahl bzw. einem Edelstahl. Dies sind die gängigen Materialien für herkömmliche Passelemente, und abgesehen von der Ausnehmung und der Einbettung des Sensorelements sollen die gängigen Ausführungen der Passelemente möglichst unverändert zum Einsatz kommen. Für spezielle Anforderungen können dabei allerdings auch andere metallische Materialien zum Einsatz kommen, z.B. titanhaltige Legierungen. Allgemein und unabhängig von der genauen Materialwahl ist der Grundkörper jedenfalls zweckmäßig aus einem einheitlichen Material gebildet, und er ist - abgesehen von der genannten Ausnehmung - massiv ausgestaltet.

Gemäß einer ersten Ausführungsvariante des Sensorelements kann dieses ein oder mehrere Dehnmessstreifen aufweisen, wobei das Messsignal dann insbesondere abhängig von einem elektrischen Widerstand des wenigstens einen Dehnmessstreifens ist, der bei einer Vorformung des Grundkörpers (und einer damit einhergehenden Verformung des Sensorelements) variiert. Die Art der Verformungsmessung ist hier also ähnlich wie bei einem herkömmlichen Drehmomentsensor - mit dem Unterschied, dass der Dehnmessstreifen nicht außen auf ein mechanisches Bauteil angeklebt ist, sondern in das Passelement integriert ist. Das Passelement ist also ein vorkonfektioniertes Bauteil mit einem integrierten Dehnmessstreifen. Hierdurch wird dem Hersteller der mechanischen Einrichtung beim Zusammenbau der kraft- oder drehmomentübertragenden Verbindung das Anbringen eines Dehnmessstreifens erspart, was den Herstellungsprozess wesentlich vereinfacht.

Bei der beschriebenen ersten Ausführungsvariante kann der jeweilige Dehnmessstreifen als Einfach-Streifen (mit einem elektrischen Anschlusspaar) oder auch als Mehrfach-Streifen (z.B. mit mehreren mäanderförmigen Leiterstrukturen und mehreren elektrischen Anschlusspaaren) ausgebildet sein. Besonders vorteilhaft ist die Ausführung als Doppel-Dehnmessstreifen, um auf einfache Weise eine Mittelung des Signals für zwei eng benachbarte Positionen zu ermöglichen. Allgemein vorteilhaft können die elektrischen Anschlüsse der jeweiligen Dehnmessstreifen zur Auslesung der Signale mit einer elektrischen Brückenschaltung miteinander verschaltet werden.

Um ein vom elektrischen Widerstand des Dehnmessstreifens abhängiges elektrisches Signal auszulesen, ist es allgemein zweckmäßig, wenn zumindest die übergeordnete Messvorrichtung auch eine Auslesevorrichtung umfasst. Diese Auslesevorrichtung (oder ein Teil davon) kann entweder auch in das Passelement integriert sein oder sie kann vollständig extern sein - also außerhalb des Passelements angeordnet. Eine externe Auslesevorrichtung kann beispielsweise auf einem der beiden zu verbindenden mechanischen Körper angeordnet sein oder auch außerhalb davon. Wenn eine externe Auslesevorrichtung vorliegt, dann kann es vorteilhaft sein, wenn das Sensorelement zwei oder mehr Kontaktstellen zur elektrischen Kontaktierung mit der Auslesevorrichtung aufweist. Über diese Kontaktstellen können die elektrischen Anschlüsse des jeweiligen Dehnmessstreifens mit einem äußeren Stromkreis der Auslesevorrichtung verbunden werden. Wenn das betreffende Passelement Teil eines feststehenden Systems ist, ist eine solche drahtgebundene Auslesung vergleichsweise einfach zu realisieren. Dann reicht es aus, an der Oberfläche (insbesondere im Bereich der Ausnehmung) Kontaktstellen vorzusehen, welche mit elektrischen Leitungen auf einem der mechanischen Körper verbunden werden können. Diese Leitungen können dann über weitere feststehende Teile der Einrichtung in den Bereich der Auslesevorrichtung geführt werden. Wenn das bestreffende Passelement auf einem begrenzt drehbaren Körper angeordnet ist, kann eine solche drahtgebundene Kontaktierung ebenfalls leicht erfolgen. Wenn es dagegen auf einer frei rotierbaren Welle angeordnet ist, dann ist es zwar grundsätzlich auch möglich, die elektrische Kontaktierung z.B. über eine Schleifringverbindung zu realisieren. Es ist aber dann unter Umständen einfacher, zumindest einen Teil der Auslesevorrichtung in dem Passelement zu integrieren und das Messsignal von dort aus drahtlos an das feststehende System zu übertragen.

Allgemein kann bei der Ausführungsvariante mit wenigstens einem Dehnmessstreifen der Grundkörper eine längliche Form haben und der Dehnmessstreifen kann durch eine Haupt-Dehnungsrichtung gekennzeichnet sein, die zumindest einen wesentlichen Richtungsanteil quer zur Hauptrichtung des Grundkörpers aufweist. Bei dieser Ausführungsform kann das längliche Passelement insgesamt in eine längliche Nut eingepasst werden. Insbesondere eignet es sich dazu, in eine axiale Nut einer drehbaren Welle eingepasst zu werden, so dass eine Messung des über die Welle übertragenen Drehmoments ermöglich wird. Die bei der Drehmomentübertragung resultierende Verformung der Welle weist hauptsächlich Richtungskomponenten in azimutaler Richtung auf. Eine solche azimutale Verformung kann besonders zweckmäßig in ein Messsignal umgesetzt werden, wenn der Dehnmessstreifen auf die beschriebene Weise in Querrichtung orientiert ist.

Der Dehnmessstreifen kann vorteilhaft eine mäanderförmige Leiterstruktur oder auch mehrere solche Mäanderstrukturen aufweisen. Allgemein und unabhängig von seiner genauen Struktur kann der Dehnmessstreifens ein metallisches Leitermaterial und/oder einen Halbleiter als Leitermaterial aufweisen. Bei den metallischen Leitern sind Konstantan oder NickelChrom-basierte Legierungen besonders bevorzugt. Konstantan ermöglicht dabei eine vergleichsweise temperaturunabhängige Messung der Widerstandsänderung aufgrund der Verformung. Bei den Halbleitern ist ein (dotiertes) silizium-basiertes Material besonders bevorzugt, da ein solcher Leiter einen ausgeprägten piezoresistiven Effekt aufweist.

Alternativ zu den beschriebenen Dehnmessstreifen kann die mechanische Verformung aber auch auf andere Weise ermittelt werden, beispielsweise über eine magnetostriktive Messung oder über die Messung mittels einer Faseroptik. Auch diese entsprechenden Ausgestaltungen des Sensorelements sollen daher von der Erfindung erfasst sein.

Bei einer allgemein vorteilhaften Ausführungsform kann in die Ausnehmung des Grundkörpers ein Halbleiterbauteil mit einem integrierten Schaltkreis eingebettet sein. Ein solcher Halbleiter-Chip kann insbesondere dazu ausgelegt sein, einen Teil der Funktionalität für die Kraft- und/oder Drehmomentmessung zur Verfügung zu stellen.

So kann das Halbleiterbauteil insbesondere die Funktionalität des Sensorelements ausbilden. Mit anderen Worten kann das Halbleiterbauteil dazu ausgelegt sein, ein von einer mechanischen Verformung beeinflusstes Messsignal bereitzustellen. Dies kann insbesondere durch die Messung einer Dehnung oder Stauchung eines Leiterelements innerhalb des Halbleiterbauteils erfolgen, analog wie oben im Zusammenhang mit dem herkömmlichen Dehnmessstreifen beschrieben.

Alternativ oder zusätzlich kann durch das Halbleiterbauteil aber auch die Funktionalität einer Ausleseeinheit für das Sensorelement ausgebildet sein. Bei einer ersten Variante dieser Ausführungsform kann das Halbleiterbauteil zusammen mit einem separaten Sensorelement (also z.B. neben, unter oder über diesem) in die Ausnehmung des Grundkörpers eingebettet sein. Bei dieser Variante ist es zweckmäßig, wenn das Halbleiterbauteil und das separate Sensorelement elektrisch miteinander kontaktiert sind. So kann mit dem Halbleiterbauteil eine elektrische Größe des Sensorelements ausgelesen werden, welches durch eine Verformung im Bereich des Sensorelements beeinflusst wird. Bei einer alternativen, zweiten Variante dieser Ausführungsform kann das Halbleiterbauteil aber auch sowohl die Funktionalität der Ausleseeinheit als auch die Funktionalität des Sensorelements zur Verfügung stellen. In diesem Fall erfolgt die elektrische Anbindung zwischen beiden funktionalen Teilen innerhalb des HalbleiterChips.

Allgemein kann das von der Ausleseeinheit ausgelesene Messsignal gegebenenfalls im Halbleiterbauteil verstärkt werden und an eine Empfangseinheit außerhalb des Passelements übermittelt werden. Eine solche Empfangseinheit ist dann ebenfalls Teil der übergeordneten Messvorrichtung. Die Signalübertragung zwischen der Ausleseeinheit und der Empfangseinheit kann beispielsweise drahtlos erfolgen. Dies ist insbesondere dann zweckmäßig, wenn das Passelement auf einem rotierenden Teil der mechanischen Einrichtung angeordnet ist und die Empfangseinheit im feststehenden Teil angeordnet ist. Wenn das Passelement dagegen auch in einem feststehenden Teil angeordnet ist, kann die Signalübermittlung zwischen dem Halbleiterbauteil und einer außenliegenden Empfangseinheit auch leitergebunden erfolgen. Ähnliches gilt für eine Energieversorgung der Ausleseeinheit: Wenn das Passelement Teil eines rotierenden Systems ist, kann die Energieversorgung der Ausleseeinheit drahtlos erfolgen, insbesondere induktiv. Wenn das Passelement dagegen Teil eines feststehenden Systems ist, kann die Energieversorgung auch kabelgebunden erfolgen.

Zu den beschriebenen möglichen Ausführungsformen des Passelements gehören jeweils korrespondierende Ausführungsformen der übergeordneten Messvorrichtung, wobei die optional vorliegende externe Empfangseinheit und die optional vorliegende externe Energieversorgungseinheit dann gegebenenfalls auch Teil der übergeordneten Messvorrichtung sind.

Gemäß einer allgemein vorteilhaften Ausführungsform der mechanischen Einrichtung umfasst diese nicht nur den ersten Körper und das Passelement, sondern auch die optionalen weiteren Bestandteile der Messvorrichtung, wie beispielsweise eine Ausleseeinheit, eine Empfangseinheit und/oder eine Energieversorgungseinheit. Mit anderen Worten kann die erfindungsgemäße mechanische Einrichtung die ganze erfindungsgemäße Messvorrichtung umfassen.

Gemäß einer weiteren vorteilhaften Ausführungsform der mechanischen Einrichtung kann diese außerdem einen zweiten Körper aufweisen, wobei das Passelement so zwischen dem ersten Körper und dem zweiten Körper formschlüssig eingepasst ist, dass die beiden Körper durch das Passelement derart mechanisch verbunden sind, dass beim Betrieb der Einrichtung die Kraft und/oder das Drehmoment zwischen den beiden Körpern übertragen wird. Mit anderen Worten bewirkt das als Sensor wirkende Passelement hier tatsächlich auch die kraft- bzw. drehmomentübertragende Verbindung zwischen den beiden Körpern. Dies ist jedoch nicht zwingend erforderlich: So kann zum Beispiel bei einer drehbar gelagerten Welle ein Passelement zur drehmomentübertragenden Verbindung mit einer Nabe vorgesehen sein und ein weiteres Passelement kann axial zwischen der Nabe und einem Wellenantrieb in die Welle eingebettet sein. Dieses weitere Passelement trägt dann nicht zur Drehmomentkopplung der beiden Körper bei, aber es kann trotzdem zur Drehmomentmessung verwendet werden, da an der Position zwischen Nabe und Wellenantrieb ebenfalls eine drehmomentabhängige Torsion der Welle vorliegt, welche in dem dort eingepassten Passelement zu einer messbaren Signaländerung führt.

Wenn jedoch gemäß der oben beschriebenen Ausführungsvariante die beiden Körper tatsächlich über das erfindungsgemäße Passelement verbunden sind, dann ist es besonders vorteilhaft, wenn die Verbindung im Wesentlichen rein formschlüssig und insbesondere flanschlos realisiert ist. Damit kann eine solche Verbindung besonders einfach und platzsparend realisiert werden.

Allgemein vorteilhaft kann es sich bei der mechanischen Einrichtung um eine Antriebseinrichtung handeln. Dann können die beiden über das Passelement verbundenen Körper insbesondere ein Antriebskörper und ein Abtriebskörper sein. Mit anderen Worten handelt es sich in diesem Fall um bewegte (beispielsweise begrenzt drehbare, frei rotierende oder auch linear bewegbare) Teile der Antriebseinrichtung. Alternativ kann es sich aber auch hier um zwei Körper im feststehenden Teil der Antriebseinrichtung handeln: So kann beispielsweise ein Getriebeabstützmoment gemessen werden, welches zwischen einem Fest-Element eines Getriebes und einer mechanischen Masse wirkt. Eine solche ortsfeste Anordnung eines Drehmomentsensors in einem Robotik-Antrieb ist beispielsweise in der noch nicht offengelegten internationalen Anmeldung mit dem Aktenzeichen PCT/EP2020/061728 beschrieben.

Wenn es sich dagegen bei den beiden Körpern um bewegliche Körper handelt, kann der Antriebskörper insbesondere eine Antriebswelle sein und der Abtriebskörper kann z.B. eine Nabe und/oder der Flansch eines Getriebes sein. In jedem Fall ist die Sensoreinheit dann vorteilhaft zur Messung eines zugehörigen Drehmoments ausgelegt. Vorteilhaft weisen Antriebs- und Abtriebskörper jeweils eine axial ausgerichtete Nut auf, in welche das Passelement eingebettet ist. Zum Beispiel kann in der Welle eine (auch in axialer Richtung) passgenaue Nut vorgesehen sein, in welche das Passelement von radial außen eingesteckt wird. Die Nabe kann dann beispielsweise eine zumindest nach einer Seite axial offene Nut aufweisen, in die die Kombination aus Welle und Passelement eingesteckt wird. Die so aufgesteckte Nabe kann dann in axialer Richtung gegen Herausrutschen gesichert werden.

Die mechanische Einrichtung kann prinzipiell für unterschiedliche Anwendungsgebiete konzipiert sein. So kann es sich beispielsweise um eine um eine Antriebseinrichtung für den Bereich der Elektromobilität handeln oder auch um eine industrielle Antriebseinrichtung. Beispielsweise kann damit ein Antrieb in einem E-Bike realisiert sein. Im industriellen Bereich werden zum Beispiel die Drehgelenke eines Roboterarms durch einen typischerweise hoch integrierten Rotationsantrieb bewegt. Es kommen aber auch zahlreiche andere vorteilhafte Anwendungen in Betracht, beispielsweise andere industrielle Antriebe und/oder Antriebe in fahrerlosen Transportfahrzeugen (Automated Guided Vehicles) sowie in sonstigen Elektrofahrzeugen. Bei all diesen Anwendungen kommen die Vorteile der Erfindung in Bezug auf Kompaktheit und integrierte Sensor-Funktionalität wirksam zum Tragen, besonders wenn der jeweilige Systemzustand möglichst präzise überwacht werden soll. Nachfolgend wird die Erfindung anhand einiger bevorzugter Ausführungsbeispiele unter Bezugnahme auf die angehängten Zeichnungen beschrieben, in denen:
- Figur 1: eine schematische Schnittdarstellung einer mechanischen Einrichtung nach einem ersten Ausführungsbeispiel zeigt,
- Figur 2: eine schematische perspektivische Ansicht eines beispielhaften Passelements zeigt,
- Figur 3: einen Längsschnitt durch ein solches Passelement zeigt,
- Figuren 4 und 5: alternative Ausführungsformen von Passelementen in übergeordneten Messvorrichtungen zeigen und
- Figur 6: eine alternative Ausführungsform einer mechanischen Einrichtung zeigt.

In den Figuren sind gleiche oder funktionsgleiche Elemente mit gleichen Bezugszeichen versehen.

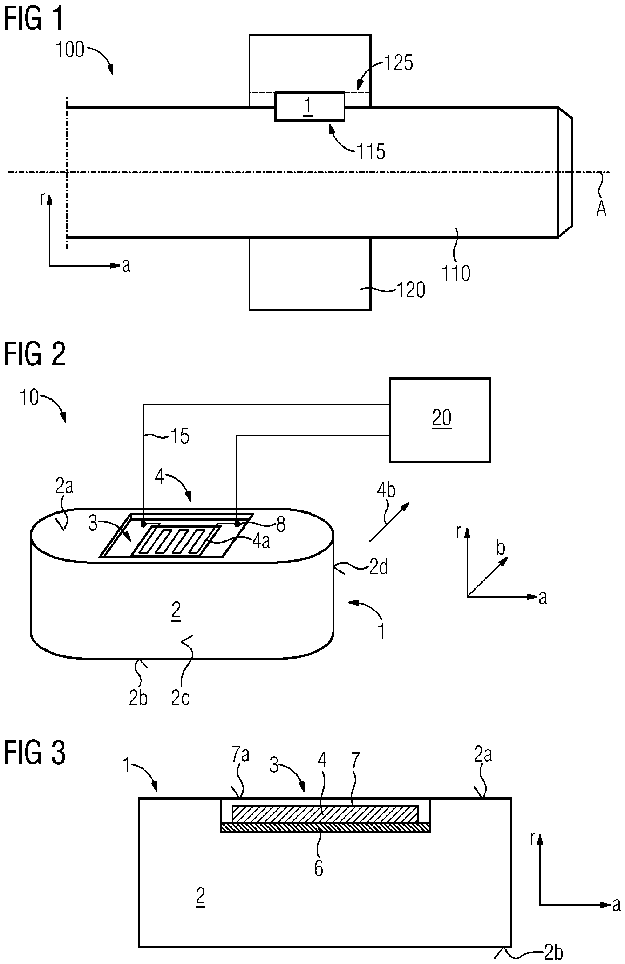

In Figur 1 ist eine mechanische Einrichtung 100 nach einem ersten Beispiel der Erfindung im schematischen Längsschnitt gezeigt. Die Einrichtung 100 umfasst zwei Körper 110 und 120, welche über ein Passelement 1 gemäß der vorliegenden Erfindung drehmomentübertragend miteinander verbunden sind. Bei dem ersten Körper 110 handelt es sich um eine Antriebswelle, welche um eine Rotationsachse A drehbar gelagert ist. Entsprechend ist die axiale Richtung hier mit a und die radiale Richtung mit r bezeichnet. Bei dem zweiten Körper 120 handelt es sich um eine Nabe, welche hier z.B. als Abtriebskörper dient. Im axialen Bereich der Nabe 120 weist die Antriebswelle 110 eine Nut 115 auf, in welche das verbindende Passelement 1 eingebettet ist. Das Passelement ist beispielsweise als Passfeder ausgestaltet. Die Nut 115 ist passgenau zur Form der der Passfeder gefräst. Im radial gegenüberliegenden Bereich der Nabe 120 weist auch diese eine Nut 125 auf. Diese Nut 125 kann beispielsweise axial durchgehend sein, wie durch die gestrichelte Linie angedeutet ist. Dadurch kann die Nabe 120 auf die Kombination aus Welle 110 und Passfeder 1 in axialer Richtung aufgeschoben werden.

Ansonsten ist auch diese Nut 125 passgenau zur Form der Passfeder 1 ausgebildet. Insgesamt wird so eine formschlüssige Verbindung erreicht, welche eine Drehmomentübertragung zwischen Welle 110 und Nabe 120 ermöglicht. Außerdem ist die Passfeder 1 so ausgestaltet, dass sie die Messung des übertragenen Drehmoments ermöglicht.

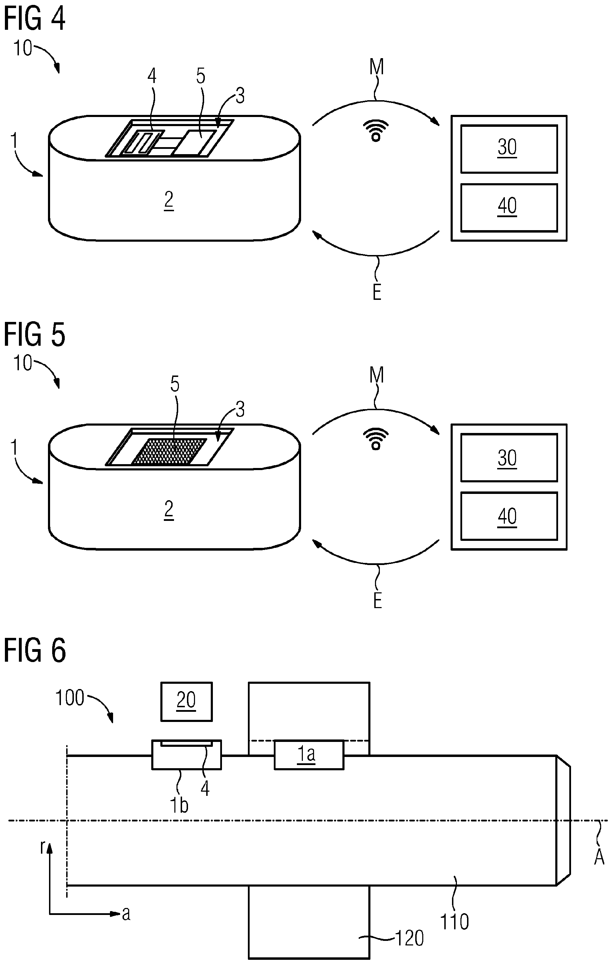

Hierzu kann die Passfeder 1 beispielsweise entsprechend den Figuren 2 und 3 ausgestaltet sein. Alternative Ausführungsformen für die Passfeder sind in den Figuren 4 und 5 dargestellt.

Die Passfeder 1 der Figur 2 weist einen Grundkörper 2 auf mit einer Ausnehmung 3, in welche ein Sensorelement 4 eingebettet ist. Die Form der Passfeder 1 entspricht hier dem A-Typ nach DIN6885. Sie ist länglich und weist einen rechteckigen Querschnitt auf, wobei die Endbereiche abgerundet sind. Dadurch ergibt sich als Grundriss eine ovale Kontur mit halbkreisförmigen Endbereichen. Diese Form ist allerdings nur beispielhaft zu verstehen, und es sind auch alle anderen Formen von Passfedern sowie auch sonstige Arten von Passelementen möglich.

Beim späteren Einbau in die mechanische Einrichtung 100 der Figur 1 wird die Passfeder so ausgerichtet, dass ihre Längsrichtung der axialen Richtung a der Welle entspricht. Dies ist durch das Koordinatensystem in Figur 2 angedeutet. Die beiden planaren Hauptflächen 2a und 2b mit ovalem Grundriss sind dann die radialen Begrenzungsflächen, wobei die Fläche 2a in der fertigen Einrichtung nach radial außen weist. Über die beiden Seitenflächen 2c wird in der fertigen Einrichtung durch die Einbettung in die Nuten 115, 125 der wesentliche Teil der Drehmoment-Übertragung bewirkt. Dies sind also die lokalen kraftübertragenden Flächen, da die lokalen Kräfte in Querrichtung b auf die Seitenflächen 2c einwirken. Die abgerundeten Stirnflächen 2d tragen dagegen nicht wesentlich zur Drehmoment-Übertragung bei.

Mit dem eingebetteten Sensorelement 4 kann ein Signal gemessen werden, welches von einer mechanischen Verformung des Grundkörpers 2 abhängt. Hierzu ist das Sensorelement 4 in eine Ausnehmung des Grundkörpers 2 eingebettet, welche auf der radial außenliegenden Hauptfläche 2a angeordnet ist. Das Sensorelement 4 ist in diesem Beispiel als Dehnmessstreifen 4a ausgestaltet, prinzipiell können hier aber auch andere Arten von Verformungs-Sensoren zum Einsatz kommen. Im vorliegenden Beispiel weist der Dehnmessstreifen 4a eine mäanderförmige Leiterstruktur auf, deren Haupt-Dehnungsrichtung 4b entlang der für die Kraftübertragung maßgeblichen Querrichtung b ausgerichtet ist. Um aus dem Sensorelement 4 ein Messsignal auslesen zu können, ist dieses über zwei an der Oberfläche der Passfeder liegende Kontaktstellen 8 elektrisch mit einer externen Ausleseeinheit 20 verbunden. Diese ist beim Beispiel der Figur 2 nicht in die Passfeder 1 integriert, aber sie ist Teil einer übergeordneten Messvorrichtung 10. Zwischen den Kontaktstellen 8 und der Ausleseeinheit 20 sind zwei elektrische Verbindungsleitungen 15 vorgesehen. Die Verbindungsleitungen 15 und die Ausleseeinheit 20 können beispielsweise im Bereich der Nabe 120 angeordnet sein. Von dort aus kann das gemessene Signal beispielsweise über eine Schleifringverbindung auf das feststehende System übertragen werden. Die Ausführungsvariante der Figur 2 (mit festen elektrischen Verbindungsleitungen) eignet sich aber auch besonders für alternative Ausführungsformen der mechanischen Einrichtung, bei denen das Passelement 1 selbst in einem feststehenden Bereich angeordnet ist, beispielsweise im Bereich einer Getriebeabstützung.

Figur 3 zeigt einen Längsschnitt durch ein Passelement 1, welches insbesondere ähnlich wie beim Beispiel der Figur 2 ausgestaltet sein kann. In diesem Längsschnitt ist zu erkennen, dass das Sensorelement 4 über ein Verbindungsmittel 6 stoffschlüssig mit dem Grundkörper 2 verbunden ist. Es kann beispielsweise eingeklebt, eingelötet oder eingesintert sein. Zusätzlich ist die Ausnehmung 3 so weit mit einem Füllmaterial 7 aufgefüllt, dass sich nach radial außen hin insgesamt eine planare Oberfläche ergibt. Die Oberfläche 7a des Füllmaterials schließt sich also bündig an die Kontur der umgebenden ersten Außenfläche 2a an. Hierdurch wird erreicht, dass das Passelement durch die beschriebene Integration des Sensorelements 4 in seiner äußeren Form nicht verändert wird. Bei der Handhabung des Passelements - insbesondere in einem Fertigungsprozess für den Einbau in die mechanische Einrichtung - ergeben sich daher keine wesentlichen Unterschiede.

In Figur 4 ist eine schematische perspektivische Ansicht eines Passelements 1 nach einem weiteren Ausführungsbeispiel gezeigt. Auch dieses Passelement ist Teil einer übergeordneten Messvorrichtung 10. Im Unterschied zum vorhergehenden Beispiel sind in die Ausnehmung 3 des Grundkörpers zwei Elemente eingebettet: ein Sensorelement 4 und ein separates Halbleiterbauteil 5, welches mit dem Sensorelement 4 elektrisch verbunden ist. Das Sensorelement 4 kann ähnlich wie beim Beispiel der Figur 2 einen Dehnmesstreifen aufweisen, dessen Widerstand sich bei einer Verformung ändert. Das Halbleiterbauelement 5 umfasst einen integrierten Schaltkreis, welcher die Funktionalität einer Ausleseeinheit zur Verfügung stellt. Durch diese Integration der Ausleseeinheit in das Passelement kann die Auslesung des Messsignals vollständig innerhalb des Passelements erfolgen. Das so ermittelte Messsignal M kann dann beispielsweise über eine drahtlose Verbindung an eine externe Empfangseinheit 30 übermittelt werden. Auch die Einspeisung der für die Messung benötigten elektrischen Energie kann drahtlos (beispielsweise induktiv) von einer externen Energieversorgungseinheit 40 auf das Halbleiterbauteil 5 erfolgen. Somit werden für das Passelement keine festen elektrischen Anschlüsse benötigt. Diese Ausführungsform eignet sich besonders für Passelemente in einem rotierenden System, beispielsweise auf einer frei rotierbaren Welle 110 wie beim Beispiel der Figur 1.

In Figur 5 ist eine weitere Alternative für die Ausgestaltung des Sensorelements 4 in dem Passelement 1 gezeigt. In diesem Beispiel ist in der Ausnehmung 3 nur ein Halbleiterbauteil 5 eingebettet, welches sowohl die Funktionalität eines Sensorelements 4 als auch die Funktionalität einer Ausleseeinheit 20 aufweist. Das damit ermittelte Messsignal M kann ähnlich wie beim Beispiel der Figur 4 drahtlos an eine externe Empfangseinheit 30 übermittelt werden, und die benötigte elektrische Energie E kann induktiv von einer Energieversorgungseinheit 40 zur Verfügung gestellt werden.

In Figur 6 ist schließlich eine alternative Ausführungsform für den Aufbau der mechanischen Einrichtung 100 gezeigt. Ähnlich wie beim Beispiel der Figur 1 ist auch hier eine Nabe 120 über ein erstes Passelement 1a formschlüssig und drehmomentübertragend mit einer Antriebswelle 110 verbunden. Das erste Passelement 1a kann gemäß der vorliegenden Erfindung mit einem integrierten Sensorelement ausgestaltet sein, es könnte sich aber auch um ein herkömmliches Passelement ohne zusätzliche Funktionalität handeln. Axial neben dem Bereich der Nabe ist in diesem Beispiel noch ein zweites Passelement 1b in eine entsprechende passgenaue Nut der Antriebswelle 110 eingebettet. In jedem Fall weist dieses zweite Passelement 1b ein integriertes Sensorelement 4 gemäß der vorliegenden Erfindung auf. Dieses zweite Passelement 1b dient zwar nicht zur Drehmomentübertragung, allerdings können die Vorteile der Erfindung auch an dieser Stelle genutzt werden. Auch an dieser axial benachbarten Position kommt es nämlich zu einer Torsion der Antriebswelle, welche durch die formschlüssige Einpassung des Passelements 1 auch dort in einer Verformung resultiert. Aus der Verformung des Grundkörpers ergibt sich analog wie bei den vorhergehenden Beispielen eine Verformung des eingebetteten Sensorelements, welche über ein elektrisches Signal M gemessen werden kann. Ein Vorteil des Ausführungsbeispiels der Figur 6 liegt darin, dass dieses zweite Passelement 1b insbesondere im Bereich des eingebetteten Sensorelements 4 nicht durch die Nabe nach außen hin abgeschirmt ist. So kann relativ einfach eine (insbesondere feststehende) Ausleseeinheit 20 in der Nähe des zweiten Passelements 1b positioniert werden, was eine drahtlose Signalübermittlung und Energieeinspeisung wesentlich erleichtert.

### Bezugszeichenliste

- 1: Passelement (Passfeder)
- 1a: erstes Passelement
- 1b: zweites Passelement
- 2: Grundkörper
- 2a: erste Außenfläche
- 2b: zweite Außenfläche
- 2c: Seitenflächen
- 2d: Stirnflächen
- 3: Ausnehmung
- 4: Sensorelement
- 4a: Dehnmessstreifen
- 4b: Haupt-Dehnungsrichtung
- 5: Halbleiterbauteil
- 6: Verbindungsmittel
- 7: Füllmaterial
- 7a: Oberfläche des Füllmaterials
- 8: Kontaktstellen
- 10: Messvorrichtung
- 15: Verbindungsleitungen
- 20: Ausleseeinheit
- 30: Empfangseinheit
- 40: Energieversorgungseinheit
- 100: mechanische Einrichtung (Antriebseinrichtung)
- 110: erster Körper (Antriebswelle)
- 115: Nut
- 120: zweiter Körper (Nabe)
- 125: Nut
- A: Rotationsachse
- a: axiale Richtung = Längsrichtung des Grundkörpers
- b: Querrichtung
- E: Energie
- M: Messsignal
- r: radiale Richtung

## Patentansprüche

1. Passelement (1) zur formschlüssigen, kraft- und/oder drehmomentübertragenden Verbindung zweier Körper (110,120),
- welches gleichzeitig als Sensoreinheit zur Messung eines Drehmoments und/oder einer Kraft ausgestaltet ist,
- wobei das Passelement (1) einen Grundkörper (2) aufweist, der auf einer ersten Außenfläche (2a) eine Ausnehmung (3) aufweist,
- und wobei in diese Ausnehmung (3) ein Sensorelement (4) eingebettet ist, welches dazu ausgelegt ist, ein Messsignal (M) bereitzustellen, das von einer mechanischen Verformung des Grundkörpers (2) beeinflusst wird.

2. Passelement (1) nach Anspruch 1, welches als Passfeder oder Scheibenfeder ausgestaltet ist.

3. Passelement (1) nach Anspruch 2, welches als Passfeder mit einer Form und Abmessungen entsprechend der Norm DIN6885 ausgestaltet ist.

4. Passelement (1) nach einem der vorhergehenden Ansprüche, bei welchem das Sensorelement (4) stoffschlüssig mit dem Grundkörper (2) des Passelements (1) verbunden ist.

5. Passelement (1) nach einem der vorhergehenden Ansprüche, bei welchem die Ausnehmung (3) zusätzlich zu dem Sensorelement (4) mit einem Füllmaterial (7) aufgefüllt ist, insbesondere derart, dass sich im Bereich der ersten Außenfläche (2a) eine insgesamt planare Oberfläche (2a,7a) des Passelements (1) ergibt.

6. Passelement (1) nach einem der vorhergehenden Ansprüche, bei welchem die erste Außenfläche (2a), welche die Ausnehmung (3) mit dem Sensorelement (4) aufweist, eine nicht-kraftübertragende Fläche des Passelements (1) ist, welche insbesondere planar ausgestaltet ist und dazu vorgesehen ist, bei einer Einpassung des Passelements (1) in eine drehbare Welle (110) eine radial außenliegende Fläche zu sein.

7. Passelement (1) nach einem der vorhergehenden Ansprüche, bei welchem der Grundkörper (2) aus einem metallischen Material, insbesondere aus einem Stahl bzw. einem Edelstahl gebildet ist.

8. Passelement (1) nach einem der vorhergehenden Ansprüche, bei welchem das Sensorelement (4) ein oder mehrere Dehnmessstreifen (4a) aufweist, wobei das Messsignal (M) abhängig vom elektrischen Widerstand des wenigstens einen Dehnmessstreifens (4a) ist, der bei einer Verformung des Grundkörpers (2) variiert.

9. Passelement (1) nach Anspruch 8,
- bei welchem der Grundkörper (2) eine längliche Form hat, und bei welchem der Dehnmessstreifen (4a) durch eine Haupt-Dehnungsrichtung (4b) gekennzeichnet ist, die zumindest einen wesentlichen Richtungsanteil quer zur Längsrichtung (a) des Grundkörpers (2) aufweist.

10. Passelement (1) nach einem der vorhergehenden Ansprüche, bei welchem in die Ausnehmung (3) ein Halbleiterbauteil (5) mit einem integrierten Schaltkreis eingebettet ist.

11. Passelement (1) nach Anspruch 10, bei welchem das Halbleiterbauteil (5) das Sensorelement (4) ausbildet.

12. Passelement nach einem der Ansprüche 10 oder 11, bei welchem das Halbleiterbauteil (5) eine Ausleseeinheit (20) für das Sensorelement (4) ausbildet.

13. Messvorrichtung (10) zur Messung eines Drehmoments und/oder einer Kraft,
umfassend ein Passelement (1) nach einem der Ansprüche 1 bis 12 sowie optional zusätzlich eine Ausleseeinheit (20) zur Auslesung eines vom Sensorelement (4) des Passelements (1) bereitgestellten Messsignals (M).

14. Mechanische Einrichtung (100), innerhalb welcher eine Kraft und/oder ein Drehmoment übertragen wird,
umfassend einen ersten Körper (110), der abhängig von der übertragenen Kraft und/oder dem übertragenen Drehmoment mechanisch verformt wird und der eine Nut (115) aufweist, in die ein Passelement (1) nach einem der Ansprüche 1 bis 12 formschlüssig eingepasst ist.

15. Mechanische Einrichtung (100) nach Anspruch 14, welche außerdem einen zweiten Körper (120) aufweist,
- wobei das Passelement (1) so zwischen dem ersten Körper (110) und dem zweiten Körper (120) formschlüssig eingepasst ist, dass die beiden Körper (110,120) durch das Passelement (1) derart mechanisch verbunden sind, dass beim Betrieb der Einrichtung (100) die Kraft und/oder das Drehmoment zwischen den beiden Körpern (110,120) übertragen wird.
